(19) Europäisches Patentamt
European Patent Office
Office européen des brevets

(11) Publication number: **0 397 346 A2**

(12) **EUROPEAN PATENT APPLICATION**

(21) Application number: **90304398.2**

(22) Date of filing: **24.04.90**

(51) Int. Cl.5: **C08G 65/32, C08G 59/50, C07C 217/00**

(30) Priority: **11.05.89 US 350278**
**11.05.89 US 350289**

(43) Date of publication of application:
**14.11.90 Bulletin 90/46**

(84) Designated Contracting States:
**CH DE FR GB LI**

(71) Applicant: **TEXACO DEVELOPMENT CORPORATION**
**2000 Westchester Avenue**
**White Plains, New York 10650(US)**

(72) Inventor: **Yeakey, Ernest Leon**
**6316 Gato Path, Austin**
**Texas 78731(US)**
Inventor: **Cuscurida, Michael**
**3453 Greystone No. 1056, Austin**
**Texas 78731(US)**
Inventor: **Sellstrom, Kathy Beth**
**613 Black Locust, Pflugerville**
**Texas 78660(US)**
Inventor: **Waddill, Harold George**
**1607c Coronado Hills Drive**
**Austin, Texas 78752(US)**

(74) Representative: **Brock, Peter William et al**
**URQUHART-DYKES & LORD 91 Wimpole Street**
**London W1M 8AH(GB)**

(54) **Aminated formaldehyde coupled polyols for curing epoxy resins.**

(57) Polyoxyalkylene amines, preferably having the formula

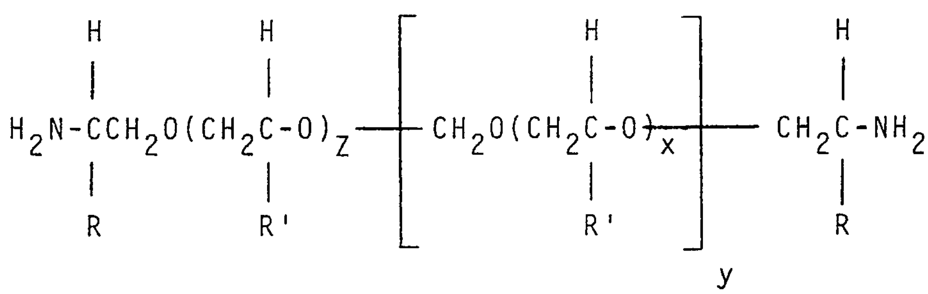

wherein R is $CH_3$ or $C_2H_5$, R' is H, $CH_3$ or $C_2H_5$, x is 1 - 25, y is 1 - 25 and z is 0 - 24, can be prepared by

a) reacting (i) a polyoxyalkylene glycol having secondary terminal hydroxy groups with (ii) an oxymethylene-yielding reagent, in the presence of a catalyst, and

b) aminating the resulting reaction product.

The use of the oxymethylene-yielding reagent enables good control of the molecular weight of the amine. The resulting amines are effective curing agents for epoxy resins.

EP 0 397 346 A2

# AMINATED FORMALDEHYDE COUPLED POLYOLS FOR CURING EPOXY RESINS

This invention is related to the preparation of polyoxyalkyleneamines made using polyoxyalkylene materials coupled with formaldehyde as the precursor polyol.

U. S. Patent 4,383,100 describes the coupling of certain diols (eg. U.S. 4,127,513) with formaldehyde. U.S. 3,027,352 relates to copolymers having oxymethylene or formaldehyde linkages.

U. S. 3,654,370 describes a process for the preparation of polyoxyalkylenepolyamines.

U.S. patent 3,236,895 discloses a wide variety of poloxyalkyleneamines.

The invention is a method for preparing a polyoxyalkyleneamine comprising reacting a polyoxyalkylene glycol having essentially all secondary hydroxy termination with an oxymethylene yielding reagent in the presence of a catalyst and then aminating the product of this reaction. The invention is also the resulting polyoxyalkyleneamine.

Another embodiment of the invention concerns the use of the polyoxyalkylene amines as curing agents for epoxy resins.

The polyalkylene glycols useful in the present invention are polyoxyalkylene glycols wherein the alkylene units contain two to four carbon atoms and wherein the polyoxyalkylene glycol is terminated with essentially all secondary hydroxyl groups. The molecular weight of the glycols may range from about 100 to 12,000 with a preferred molecular weight range of about 400 to 2,500.

Glycols may be made to any molecular weight by continually polymerizing alkylene oxides. However, as the molecular weight rises, the continued reactivity with alkylene oxide diminishes and the viscosity buildup hinders handling. Unsaturation in the polyol also tends to increase. By the use of the present technique, glycols of low molecular weight may be coupled in a facile manner with oxymethylene groups to give resulting glycols of higher molecular weight without the difficulties described above. The oxymethylene unit may be repeated as many times as desired consistent with continued reactivity and processing convenience. As will be shown in the examples a 2000 molecular weight polypropylene glycol may be easily doubled in molecular weight with a single oxymethylene coupling. This resulting glycol is not only easy to make but has low unsaturation which is an advantage in many applications including the subsequent amination of the product to form a polyoxyalkyleneamine. Low unsaturation generally results in more complete amination. Lower molecular weight glycols, such as diethylene glycol or polypropylene glycols of about 400 molecular weight may be repeated several times without difficulty to form products with an abundance of oxymethylene repeating units. These materials have advantages in themselves when used as hydroxyl materials in polyurethanes, for example, and also are excellent candidates for amination to form polyoxyalkyleneamines.

Polyalkylene glycols of about 100 to 2000 molecular weight are useful. Diethylene glycol is the lowest molecular weight glycol used in this invention.

In order to aminate the polyoxyalkylene glycols which have been coupled with formaldehyde, it is necessary that the terminal hydroxyls on the glycol be secondary. Therefore, any primary hydroxyl terminated materials must be reacted with compounds such as propylene or butylene oxide prior to amination.

The source of the oxymethylene unit may be formaldehyde in its many forms. For example, formaldehyde may be used as a gas, as an aqueous solution, paraformaldehyde, trioxane, or methyl formcel. As used herein, the term "formaldehyde" means any of these forms and others known to those skilled in the art. Although water is a byproduct of some reactions, if an aqueous solution of formaldehyde is used, excess water must subsequently be stripped from the material and, therefore, other sources of formaldehyde such as paraformaldehyde are preferred.

The relative amounts of glycols and formaldehyde which are used are governed by the desired product. Thus, if a single glycol is merely to be coupled, then an ideal ratio would be two moles of glycol to one mole of formaldehyde containing formaldehyde. However, if a glycol is to be repeated several times, then the ratio of glycol to formaldehyde must be adjusted to satisfy the stoichiometry of the final product. Often an excess of formaldehyde must be used since in some of its forms it tends to leave the reaction medium by sublimation and thus must be replaced.

The catalyst used to react the polyalkylene glycols with formaldehyde can be any strongly acidic cationic ion-exchange resin bearing $-SO_3H$ groups, insoluble in the copolyether glycol. "Insoluble" means that the amount of resin which dissolves in the glycol under process conditions will give the formal diol product an acid number of no greater than 0.5 mg. of KOH per gram.

For purposes of the invention, the nature of the "backbone" of the ion-exchange resin is unimportant. The most common of the commercially available resins of this type have backbones which are of the

polystyrene type, but resins having other backbones can be used. Preferred among the polystyrene-type resins, and preferred for use, is one sold by the Rohm & Haas Company of Philadelphia, PA, as Amberlyst® XN-1010. This macroreticular resin has a cation exchange capacity of 3.1 milliequivalents per gram, a surface area of 450 square meters per gram, a porosity of 41%, and a mean pore diameter of 50 Angstrom units.

Other preferred catalysts are the perfluorosulfonic acids and resins as described in U.S. 4,038,213 .

Such products include Nafion® resins from Dupont.

The catalyst is used at a concentration of 1-10%, by weight of the copolyether glycol, preferably 5-10%.

The reaction is carried out at a temperature of 60°-110° C., preferably 70°-90° C. If the reaction is conducted in an aromatic hydrocarbon medium, the water of condensation formed can be removed by azeotropic distillation. If it is conducted in bulk, the water can be removed under vacuum or by sweeping the reaction zone with nitrogen.

The oxymethylene coupled glycols thus formed may be used as polyols are generally used, for example in urethanes, or may be aminated to form polyoxyalkyleneamines. The terms "aminated glycols", "amine terminated polyethers", "amine terminated glycols" and "polyoxyalkyleneamines" are interchangeable. The polyoxyalkyleneamines of this invention are formed by the amination of the oxymethylene coupled glycols discussed above as was described in U. S. 3,654,370.

When two or more alkylene oxides are used, they may be present as random mixtures or as blocks of one or the other polyether. In the amination step it is highly desirable that the terminal hydroxyl groups to be aminated in the glycol be essentially all secondary hydroxyl groups. Normally, the amination step does not completely replace all of the hydroxyl groups. However, the majority of hydroxyl groups are replaced by amine groups. If ethylene oxide is used it is desirable to cap the hydroxyl terminated glycol with a small amount of higher alkylene oxide to ensure that the terminal hydroxyl groups are essentially all secondary hydroxyl groups. The glycols so prepared are then reductively aminated as outlined in U.S. Pat. No. 3,654,370 .

The polyoxyalkylene amines prepared according to this invention have the following general structure:

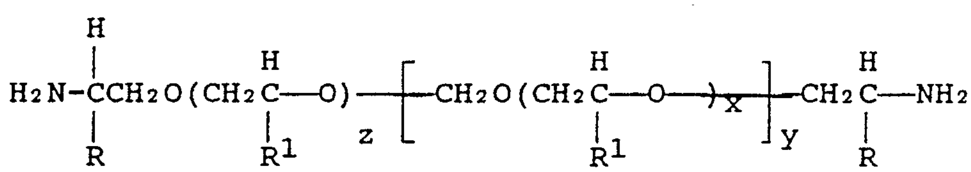

where

R = $CH_3$, $C_2H_5$

$R^1$ = H,$CH_3$,$C_2H_5$

x = 1-25

y = 1-25

z = 0-24

The following structures are specific, useful polyoxyalkylene amines of this invention:

(A)

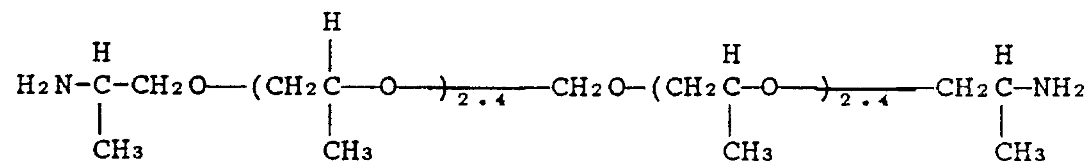

(B)

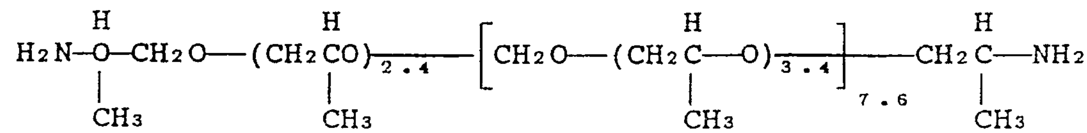

(C)

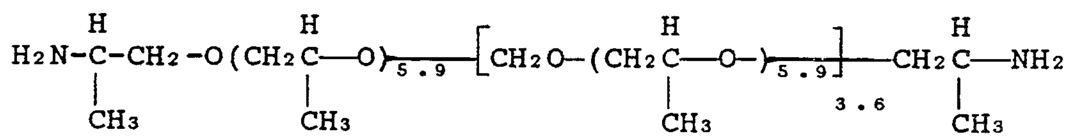

(D)

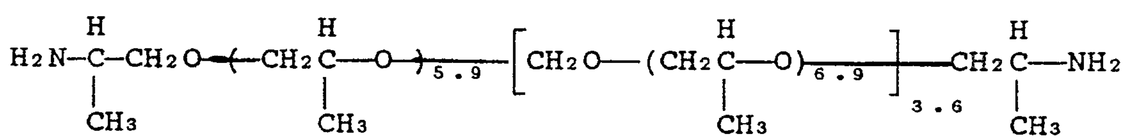

(E)

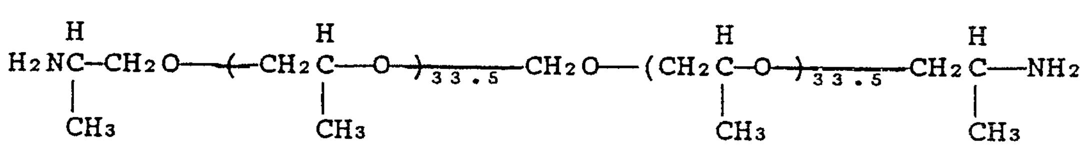

## EXAMPLES

### Example 1

Into a one-half gallon stirred autoclave were charged 500g of a 2000 m.w. polypropylene glycol, 25g Amberlyst XN-1010 acidic ion-exchange resin and 16.5g paraformaldehyde (formaldehyde/polyol ratio of 2.0). The reactor was then purged with purified nitrogen and heated to 100° C. The reaction mixture was then heated to 100° C for four hours with a full vacuum on the kettle. The product was then filtered to remove the ion-exchange resin. Properties of the finished product were as follows:

| | |
|---|---|
| Appearance | Yellow, viscous liquid |
| Acid no.; mg. KOH/g | 0.5 |
| Hydroxyl no. mg. KOH/g | 32.2 |
| pH in 10:6 isopropanol water | 3.5 |
| Viscosity, ° F cs | |
| 77° | 1020 |
| 100° | 503 |
| Unsaturation, meq/g | 0.03 |
| Mn | 3484 |

A 4000 m.w. polypropylene glycol, made using conventional methods, contained 0.12 - 0.16 meq/g terminal unsaturation.

Example 2

This example will further illustrate the preparation of the formaldehyde-coupled polyols. It will further show ranges of formaldehyde/polyol and catalyst levels which can be employed. The basic procedure of Example 1 was used in these experiments.

| | A | B | C |
|---|---|---|---|
| Charge | | | |
| Thanol PPG-2000,g | 1000 | 1000 | 1000 |
| Amberlyst XN-1010,g | 25 | 12.5 | 25 |
| Paraformaldehyde, g | 16.5 | 16.5 | 16.5 |
| Reaction Details | | | |
| Formaldehyde/polyol ratio | 1.1 | 1.1 | 1.1 |
| Temperature, ° C | 100-102 | 100-102 | 100 |
| Viscosity, 77° F, cs | - | 1008 | 876 |
| 100° F, cs | - | 553 | 443 |
| Properties | | | |
| Acid no., mg KOH/g | 0.2 | 0.009 | 0.13 |
| Hydroxyl no., mg KOH/g | 33.3 | 34.3 | 37.9 |
| Water, wt.% | - | 0.06 | 0.04 |
| pH in 10:6 isopropanol-water | 3.8 | 4.1 | 4.1 |
| Color, Pt-Co | 200 | 150 | 300 |
| Unsaturation, meq/g | 0.032 | 0.029 | 0.03 |
| Viscosity, 77° F, cs | 1010 | 1008 | 876 |
| 100° F, cs | 547 | 553 | 433 |

Example 3

The formaldehyde-coupled polyols of Example 2 were blended together and fed at a rate of 55 g/hr along with ammonia at 60 g/hr and hydrogen at 5 liters/hr to a tubular reactor containing 110 cc of 6 x 8 mesh Raney® nickel catalyst. The reaction was run at 195° C/2000 psig for 2.5 hours while the effluent was discarded and then for one hour while effluent was being collected. The reactor effluent was stripped on a rotary evaporator at 99° C and 25 mm Hg. The product had total acetylatables, total amines, and primary amines of 0.64, 0.54, and 0.51 meq/g, respectively.

When the procedure was repeated at 205 °C/2025 psig and at 212 °C/2000 psig the products had the following analyses:

| Properties / Reaction Conditions | Acetylatables meq/g | Amine meq/g | Amine meq/g |
|---|---|---|---|
| 205 °C/2025 psig | 0.62 | 0.57 | 0.56 |
| 212 °C/2000 psig | 0.65 | 0.60 | 0.58 |

Example 4

This example will show the improved properties of epoxy resins cured with the diamine of Example 3 of this invention as compared to those cured with a prior art 2000 molecular weight polyoxyalkylenediamine (JEFFAMINE® D-2000, Texaco Chemical Co.).

Formulations and properties of the cured epoxy resins are shown in Table 1.

TABLE 1

| EXAMPLE 4 | | | | | | | | | |
|---|---|---|---|---|---|---|---|---|---|
| FORMULATION | A | B | C | D | E | F | G | H | I |
| Liquid Epoxy resin (e.w. 185) | 100 | 100 | 100 | 100 | 100 | 100 | 100 | 100 | 100 |
| JEFFAMINE® D-400 | 57 | 56 | 55.1 | 54.0 | 52.6 | 55.5 | 54.0 | 52.0 | 49.8 |
| Diamine of Example 3 | - | 6.2 | 13.8 | 23.2 | 35.1 | - | - | - | - |
| Jeffamine D-2000 | - | - | - | - | - | 6.5 | 13.0 | 22.0 | 33.2 |
| Properties of Cured 1/8 in. Castings [a] | | | | | | | | | |
| Izod impact strength, ft-lbs/in | 0.14 | 0.12 | 0.30 | 0.51 | 1.62 | 0.14 | 0.10 | 0.17 | 5.6 |
| Rheometric impact, total energy, in-lb | 52 | 33 | 101 | 83 | 99 | 59 | 87 | 81 | 79 |
| Tensile strength, psi | 7700 | 6100 | 4200 | 2400 | 1700 | 6700 | 4400 | 2600 | 1400 |
| Tensile modulus, psi | 411000 | 328000 | 225000 | 139500 | 28100 | 367000 | 293000 | 107000 | 12100 |
| Elongation, at break, % | 5.0 | 10.0 | 68.0 | 73.0 | 77.0 | 4.7 | | 41 | 85 |
| Flexural strength, psi | 12300 | 10200 | 7700 | 3600 | 900 | 11600 | 8600 | 3000 | 400 |
| Flexural modulus, psi | 411000 | 350000 | 239000 | 117500 | 33200 | 389000 | 269000 | 108000 | 10900 |
| HDT, °C, 264 psi/66 psi | 44/47 | 43/44 | 36/41 | 30/35 | 25/28 | 43/43.5 | 37/40 | 30/35 | <25/<25 |
| Shore D hardness, 0-10 sec. | 71-67 | 64-59 | 58-53 | 56-47 | 48-37 | 69-65 | 65-61 | 61-52 | 48-35 |
| Compressive strength at failure, psi | 33500 | 40800 | 30000 | 41000 | 32700 | 30700 | - | - | 50200 |
| % Wt. gain, 24 hr. water boil | 2.8 | 2.4 | 2.5 | 2.4 | 2.8 | 2.8 | 2.8 | 2.8 | 2.8 |
| % Wt. gain, 3 hour acetone boil | 21.7 | 26.9 | 27.2 | 30.3 | 42.9 | 24.5 | 23.7 | 31.9 | 40.4 |
| Adhesive Properties[b] | | | | | | | | | |
| Tensile shear strength, psi | 3900 | 3400 | 2600 | 2300 | 1900 | 3400 | 2700 | 2100 | 1500 |
| T-peel strength, psi | 5.9 | 5.3 | 15.3 | 18.1 | 14.9 | 5.5 | 9.8 | 14.3 | 23.9 |

[a] Cured 2 hours 80 °C, 3 hours 125 °C
[b] Cured 1 hour at 125 °C.

Example 5

Into a 1-liter, three-necked flask equipped with a stirrer, thermometer, condenser and nitrogen source were charged 500g of a 2000 molecular weight polypropylene glycol, 12.5g NAFION® 501 ion-exchange resin and 16.5g trioxane. The mixture was then heated to 100 °C and held at that temperature for 2.75

hours. The reaction mixture was then vacuum stripped to a minimum pressure (5 mm Hg) at 110°C for 1.5 hours and filtered. The finished product has the following properties. For comparison, properties of the 2000 molecular weight glycol are also shown.

| | Products of Examples | 2000 MW Polypropylene Glycol |
|---|---|---|
| Properties : | | |
| Acid no., mg KOH/g | 0.1 | 0.1 |
| Hydroxyl no., mg KOH/g | 26.6 | 56 |
| Water, wt.% | 0.06 | 0.1 |
| Viscosity, cs | | |
| 77°F | 1512 | 280 |
| 100°F | 758 | 145 |
| Molecular Weight | | |
| Mn | 3520.7 | 1985.9 |
| Mw | 4884.6 | 2082.5 |
| Polydispersity | 1.387 | 1.049 |

Example 6

This example will further illustrate the preparation of the polyformal diols of this invention. It will further show the effect of varying the mole ratio of $CH_2O/OH$ on the properties of the resultant product. These runs were made using the general procedure of Example 5.

| Diol Number | 1 | 2 | 3 | 4 | 5 | 400 M.W. PPG |
|---|---|---|---|---|---|---|
| Charge | | | | | | |
| 400 m.w. polypropylene glycol, g | 400 | 800 | 800 | 800 | 400 | - |
| Trioxane, g | 24 | 72 | 96 | 120 | 66 | |
| NAFION® 501, g | 10 | 20 | 20 | 20 | 10 | - |
| Reaction Details | | | | | | |
| Temperature, °C | 98-102 | 100 | 100 | 100 | 95-100 | - |
| Time, hr | 3.0 | 3.0 | 3.0 | 3.0 | 3.0 | - |
| Stripping temp., °C | 100 | 100 | 100-101 | 100 | 100-108 | - |
| Stripping time, hr | 1.1 | 1.0 | 1.1 | 1.25 | 1.0 | - |
| Moles $CH_2O$/OH | 0.8 | 1.2 | 1.6 | 2.0 | 2.2 | - |
| Properties | | | | | | |
| Acid no., mg KOH/g | 0.042 | 0.052 | 0.027 | 0.03 | 0.11 | 0.05 |
| Hydroxyl no., mg KOH/g | 132 | 117 | 50.3 | 35.4 | 36.8 | 262 |
| Water, wt.% | 0.05 | 0.07 | 0.03 | 0.06 | 0.03 | 0.05 |
| pH in 10:6 isopropanol/water | 4.8 | 5.1 | 5.0 | 4.9 | 4.7 | 4.8 |
| Viscosity, °F, cs | | | | | | |
| 77 | 193 | 208 | 864 | 1576 | 1429 | 60.6 |
| 100 | 92.7 | 101 | 409 | 753 | 670 | 34.1 |
| Molecular Weight | | | | | | |
| Mn | 905.5 | 982.2 | 2603.1 | 3271.6 | 3036.7 | 501 |
| Mw | 1305.9 | 1354.8 | 3466.8 | 4704 | 4441.6 | 511.1 |
| Polydispersity | 1.442 | 1.379 | 1.332 | 1.434 | 1.463 | 1.020 |

Example 7

This example will illustrate the reductive amination of Diol 4 of Example 6 blended with two other products made in a similar manner. The average weight of the blend is 36.5. The molecular weight data indicated that this material contained 7-8 oxymethylene linkages.

To a tubular reactor maintained at 210°C and 1950 psig containing 105 cc of proprietary amination catalysts there were simultaneously added the polyol at 51.05 g/hr, ammonia at 53.19 g/hr and hydrogen at 4 liters/hr. Effluent was discarded for the first three hours and then collected for the next 19 hours. The effluent was then stripped on a rotary evaporator at 99°C and 5 mm Hg. Analyses of the finished product were as follows:

| Properties | |
|---|---|
| Total acetylatables, meq/g | 0.733 |
| Total amine, meq/g | 0.66 |
| Primary amine, meq/g | 0.65 |
| Water, wt.% | 0.008 |

Example 8

This example will illustrate the reductive amination of polyol Diol 3 of Example 6. This formal diol

contained 5-6 oxymethylene groups.

Using the procedure of Example 7 this diol was fed at 51.96 g/hr, ammonia at 54.2 g/hr and hydrogen at 4 liters/hr. Analyses of the stripped product were as follows:

| Properties | |
|---|---|
| Total acetylatable, meq/g | 0.928 |
| Total amine, meq/g | 0.84 |
| Primary amine, meq/g | 0.83 |
| Water, wt.% | 0.05 |

Example 9

This example will illustrate the use of the aminated diol blend of Example 7 as a curing agent in an epoxy resin formulation. It will further show the improved tensile strength, tensile modulus, flexural strength and flexural modulus of the cured epoxy resin as compared to a formulation cured with a prior art 2000 molecular weight polyoxypropylenediamine (JEFFAMINE® D-2000; Texaco Chemical Co.). Formulations and properties are shown in Tables 2 and 4.

Example 10

This example will illustrate the use of the aminated diol of Example 8 as a curing agent in an epoxy resin formulation. It will further show the improved properties of the cured resin as compared to a formulation cured with JEFFAMINE D-2000. Formulations and properties are shown in Tables 3 and 4.

Examples 11-14 describe the preparation of a polyoxyalkylene amine of the formula:

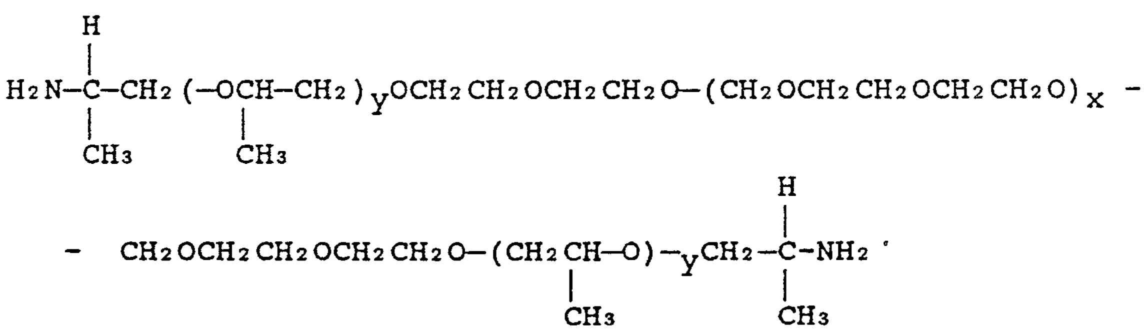

where x = 5-30 and y = 0-4.

TABLE 2

| PROPERTIES: CURING WITH JEFFAMINE® D-400 AND AMINATED FORMAL LINKED DIOLS | | | | | |
|---|---|---|---|---|---|
| FORMULATION | A | B | C | D | E |
| Liquid Epoxy resin (e.w. 185) | 100 | 100 | 100 | 100 | 100 |
| JEFFAMINE® D-400 | 57 | 55.9 | 54.9 | 53.6 | 52.0 |
| Aminated diol blend of Example 7 | - | 6.1 | 13.7 | 23.0 | 34.7 |
| Properties of Cured 1/8 in. Castings [1] | | | | | |
| Izod impact strength, ft-lbs/in. | 0.14 | 0.07 | 0.19 | 0.39 | 0.80 |
| Rheometric impact, total energy, in.-lbs. | 52 | 38 | 53 | 79 | 94 |
| Tensile strength, psi | 7700 | 6500 | 6100 | 3600 | 2400 |
| Tensile modulus, psi | 41100 | 335000 | 280000 | 201000 | 86000 |
| Elongation, at break, % | 5.0 | 10.9 | 14.1 | 48 | 77 |
| Flexural strength, psi | 12300 | 10800 | 9400 | 6100 | 2600 |
| Flexural modulus, psi | 411000 | 362000 | 293000 | 189000 | 91300 |
| HDT, °C, 264 psi/66 psi | 44/47 | 43/45 | 35/40 | 33/37 | 31/32 |
| Shore D hardness, 0-10 sec. | 71-67 | 59-54 | 58-52 | 54-48 | 50-40 |
| Compressive strength at failure, psi | 33500 | 43350 | 28800 | - | 31800 |
| % Wt. gain, 24 hr. water boil | 2.8 | 3.0 | 3.0 | 2.9 | 2.8 |
| % Wt. gain, 3 hour acetone boil | 21.7 | 25.1 | 22.7 | 24.8 | 40.2 |
| Adhesive Properties [2] | | | | | |
| Tensile shear strength, psi | 3900 | 3300 | 2900 | 2900 | 2600 |
| T-peel strength, psi | 5.9 | 9.7 | 16.6 | 17.6 | 16.3 |

[1]Cured 2 hrs. 80°, 3 hrs. 125° C
[2]Cured 1 hr. 125° C

TABLE 3

| PROPERTIES: CURING WITH JEFFAMINE® D-400 AND AMINATED FORMAL LINKED DIOLS | | | | | |
|---|---|---|---|---|---|
| FORMULATION | A | B | C | D | E |
| Liquid Epoxy resin (e.w. 185) | 100 | 100 | 100 | 100 | 100 |
| JEFFAMINE® D-400 | 57 | 55.7 | 54.4 | 52.8 | 50.8 |
| Aminated diol blend of Example 8 | - | 6.0 | 13.6 | 22.0 | 34.0 |
| Properties of Cured 1/8 in. Castings [1] | | | | | |
| Izod impact strength, ft-lbs/in. | 0.14 | 0.08 | 0.25 | 0.42 | 1.06 |
| Rheometric impact, total energy, in.-lbs. | 52 | 44 | 96 | 98 | 102 |
| Tensile strength, psi | 7700 | 6800 | 5300 | 3500 | 2600 |
| Tensile modulus, psi | 41100 | 357000 | 291500 | 189000 | 61500 |
| Elongation, at break, % | 5.0 | 4.7 | 25 | 68 | 76 |
| Flexural strength, psi | 12300 | 11700 | 9200 | 5400 | 1800 |
| Flexural modulus, psi | 411000 | 383000 | 292000 | 175000 | 61100 |
| HDT, °C, 264 psi/66 psi | 44/47 | 43/45 | 35/38 | 32/35 | 26/28 |
| Shore D hardness, 0-10 sec. | 71-67 | 60-55 | 58-53 | 54-48 | 48-37 |
| Compressive strength at failure, psi | 33500 | 34100 | 37100 | 32100 | 32700 |
| % Wt. gain, 24 hr. water boil | 2.8 | 3.0 | 3.0 | 3.0 | 2.9 |
| % Wt. gain, 3 hour acetone boil | 21.7 | 21.2 | 24.5 | 32.5 | 38.3 |
| Adhesive Properties [2] | | | | | |
| Tensile shear strength, psi | 3900 | 3400 | 3000 | 2600 | 2100 |
| T-peel strength, psi | 5.9 | 9.4 | 14.7 | 17.2 | 18.6 |

[1]Cured 2 hrs. 80°, 3 hrs. 125° C
[2]Cured 1 hr. 125° C

TABLE 4

| PROPERTIES: CURING WITH JEFFAMINE® D-400 - JEFFAMINE® D-2000[1] BLENDS (COMPARATIVE EXAMPLE) | | | | | |
|---|---|---|---|---|---|
| FORMULATION | A | B | C | D | E |
| Liquid Epoxy resin (e.w. 185) | 100 | 100 | 100 | 100 | 100 |
| JEFFAMINE® D-400 | 57 | 55.5 | 54.0 | 52.0 | 49.8 |
| JEFFAMINE® D-2000 | - | 6.5 | 13.0 | 22.0 | 33.2 |
| Properties of Cured 1/8 in. Castings [2] | | | | | |
| Izod impact strength, ft-lbs/in. | 0.14 | 0.14 | 0.10 | 0.17 | 5.6 |
| Rheometric impact, total energy, in.-lbs. | 52 | 59 | 87 | 81 | 79 |
| Tensile strength, psi | 7700 | 6700 | 4400 | 2600 | 1400 |
| Tensile modulus, psi | 41100 | 367000 | 293000 | 107000 | 12100 |
| Elongation, at break, % | 5.0 | 4.7 | 41 | 85 | 73 |
| Flexural strength, psi | 12300 | 11600 | 8600 | 3000 | 400 |
| Flexural modulus, psi | 411000 | 389000 | 269000 | 108000 | 10900 |
| HDT, °C, 264 psi/66 psi | 44/47 | 43/43.5 | 37/40 | 30/35 | <25/<25 |
| Shore D hardness, 0-10 sec. | 71-67 | 69-65 | 65-61 | 61-52 | 48-35 |
| Compressive strength at failure, psi | 33500 | 30700 | - | - | 50200 |
| % Wt. gain, 24 hr. water boil | 2.8 | 3.0 | 3.0 | 3.0 | 2.9 |
| % Wt. gain, 3 hour acetone boil | 21.7 | 24.5 | 23.7 | 31.9 | 40.4 |
| Adhesive Properties [3] | | | | | |
| Tensile shear strength, psi | 3900 | 3400 | 2700 | 2100 | 1500 |
| T-peel strength, psi | 5.9 | 5.5 | 9.9 | 14.3 | 23.9 |

[1]Eq. wt. 500; typical product
[2]Cured 2 hrs. 80°, 3 hrs. 125° C
[3]Cured 1 hr. 125° C

Example 11

This example will illustrate the preparation of propylene oxide adducts of diethylene glycol/formaldehyde condensates. These products were made using the following two-step procedure.

Step 1. Preparation of Diethylene Glycol/Formaldehyde Condensate

Into a ten-gallon kettle were charged 12.72 lbs. of diethylene glycol, 4.5 lbs paraformaldehyde and 205 g AMBERLYST® 15 acidic ion-exchange resin. The reactor was then purged with prepurified nitrogen. The reactants were then heated at 100-105°C for four hours. The product was then dewatered by vacuum stripping to a minimum pressure at 105°C followed by a nitrogen purge for 30 minutues. Properties of the filtered product were as follows:

| Properties | |
|---|---|
| Acid no., mg KOH/g | 0.26 |
| Hydroxyl no., mg KOH/g | 73.9 |
| Water, wt.% | 0.12 |
| pH in 10:6 isopropanol water | 3.8 |
| Viscosity, 100° F, cs | 444 |
| Appearance | Tan colored solid at room temperature |

Step 2 Preparation of Propylene Oxide Adduct of Product from Step 1

Into a ten-gallon kettle were charged 10 lb of the diethylene glycol/formaldehyde condensate from Step 1 and 100g of 45% aqueous potassium hydroxide. The reactor was then purged with prepurified nitrogen. The reaction charge was then dewatered by vacuum stripping to a minimum pressure at 100° C followed by nitrogen stripping for one-half hour. Propylene oxide (2.3 lb) was then reacted at 110-115° C at 50 psig. The reaction mixture ws then digested two hours to an equilibrium pressure. The alkaline product was then neutralized at 95° C by stirring two hours with 360g MAGNESOL® 30/40 which was added as an aqueous slurry. Di-t-butyl-p-cresol (4.5g) was then added for stabilization of the product. The neutralized product was then vacuum stripped and filtered. The finished product had the following properties:

| Properties | |
|---|---|
| Acid no., mg KOH/g | 0.015 |
| Hydroxyl no., mg KOH/g | 62.0 |
| Water, wt.% | 0.039 |
| pH in 10:6 isopropanol/water | 6.9 |
| Sodium, ppm | 11 |
| Potassium, ppm | 33 |
| Viscosity, 100° | 431 |
| Appearance | Tan solid at room temperature |

Example 12

This example will illustrate a scale-up preparation of a diethylene glycol/formaldehyde condensate. Using the procedure described in Step 1 of Example 1, 27.15 lb of diethylene glycol was reacted with 9.72 lb of paraformaldehyde using 442.8g AMBERLYST® 15 ion-exchange resin for catalysis. The finished product had the following properties:

| Properties | |
|---|---|
| Acid no., mg KOH/g | 0.34 |
| Hydroxyl no., mg KOH/g | 64.3 |
| Water, wt% | 0.034 |
| pH in 10:6 isopropanol/water | 3.7 |

The NMR spectra of the product was consistent with the following structure:
$HOCH_2CH_2OCH_2CH_2O\text{-}(CH_2OCH_2CH_2OCH_2CH_2O\text{-})_{10}CH_2OCH_2CH_2OCH_2CH_2OH$

Example 13

Using the following reaction charge and the procedure of Step 2 of Example 12, a polyol was prepared. Reaction charges were as follows:

| | |
|---|---|
| Diethylene glycol/formaldehyde condensate of Example 12, lb. | 21.25 |
| Potassium hydroxide, g | 48.2 |
| Propylene oxide, lb | 4.25 |
| MAGNESOL° 30/40, g | 856.8 |
| Di-t-butyl-p-cresol, g | 11.56 |

The finished product has the following properties:

| Properties | |
|---|---|
| Acid no., mg KOH/g | 0.009 |
| Hydroxyl no., mg KOH/g | 70.1 |
| Water, wt.% | 0.12 |
| pH in 10:6 isopropanol/water | 7.0 |
| Sodium, ppm | 33 |
| Potassium, ppm | 75 |
| Viscosity, 100 °F, cs | 420 |
| Appearance | Light tan solid at room temperature |

Example 14

A tubular reactor containing 825 cc of an extruded and supported nickel/copper/chromium/molybdenum catalyst was maintained at 200 °C and 2000 psig while there were simultaneously fed to it the polyol of Example 11, ammonia and hydrogen at respective ratios of 1.2 lb/hr, 1.48 lb/hr and 40 liters/hr. After running for two hours, effluent was collected for 25 minutes. The material was then stripped on a rotary evaporator at 99 °C and 5 mm mercury. The total acetylatables, total amines and primary amines analyzed at 1.12, 1.12 ansd 1.11 meq/g, respectively. The above procedure was then repeated at 210 °C. Reaction conditions and results of the above runs are shown in the following table. Analysis of the product made at 200 °C by $C^{13}$ NMR was consistent with the following structure:

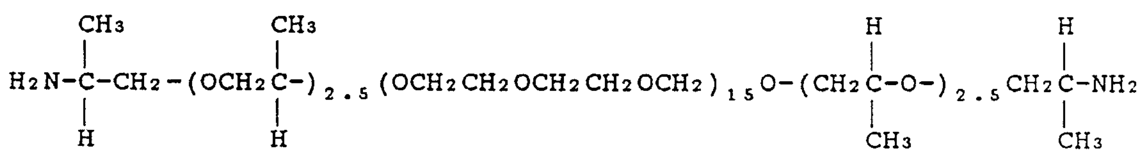

Example 15

This example will illustrate the use of the aminated derivatives of propylene oxide adducts of alkylene glycol/formaldehyde condensates as curing agents for epoxy resins. It will further show that epoxy resins, when cured with products of this invention, have higher Izod impact strength and lower tensile and flexural modulus values, as compared to those cured with prior art polyoxyalkylene amines. Typical prior art polyoxyalkylene amines are JEFFAMINE® amines supplied by Texaco Chemical Co. such as JEFFAMINE D-400 and JEFFAMINE D-2000. This combination of properties shows that a tougher, more flexible cured system was produced. Formulations, details of preparation and properties are shown below:

| Formulation, pbw | A-1 | A-2 |
|---|---|---|
| Liquid epoxy resin (EEW 188) | 100 | 100 |
| 6292-80-2 | 24.7 | - |
| JEFFAMINE D-400 | 49.3 | 50 |
| JEFFAMINE D-2000 | - | 25 |
| Properties of Cured 1/8-inch Castings | | |
| cured 2 hours 80 °C, 3 hours 125 °C | | |
| Shore D hardness, 0-10 sec | 66-41 | 62-58 |
| HDT, °C, 264 psi/66 psi load | ~25/~25 | ~25/~25 |
| Izod impact strength, ft-lb/in | 8.0 | 2.8 |
| Tensile strength, psi | 1500 | 1700 |
| Tensile modulus, psi | 11000 | 30500 |
| Elongation at break, % | 72 | 86 |
| Flexural strength, psi | 380 | 970 |
| Flexural modulus, psi | 16800 | 42000 |
| Adhesive Properties | | |
| cured 1 hour 125 °C | | |
| Tensile shear strength, psi | 1800 | 1600 |
| T-peel strength, pli | 12.7 | 15.9 |

## Claims

1. A method for preparing a polyoxyalkylene amine which comprises (a) reacting (i) a polyoxyalkylene glycol, wherein the alkylene units have 2 to 4 carbon atoms and wherein the polyoxyalkylene glycol is terminated with essentially only secondary hydroxyl groups, with (ii) an oxymethylene-yielding reagent in the presence of a catalyst, and then (b) aminating the resulting reaction product.

2. A method according to Claim 1 characterized in that the polyoxyalkylene glycol is a polypropylene glycol having a molecular weight of 100 to 2000.

3. A polyoxyalkylene amine having the formula:

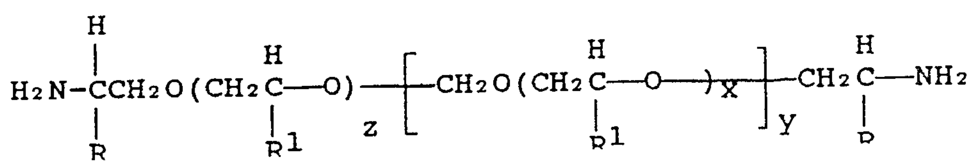

wherein
R is $CH_3$ or $C_2H_5$,
$R^1$ is $H_1$, $CH_3$ or $C_2H_5$,
x is 1 - 25
y is 1 - 25, and
z is 0 - 24.

4. A polyoxyalkyleneamine having the formula:

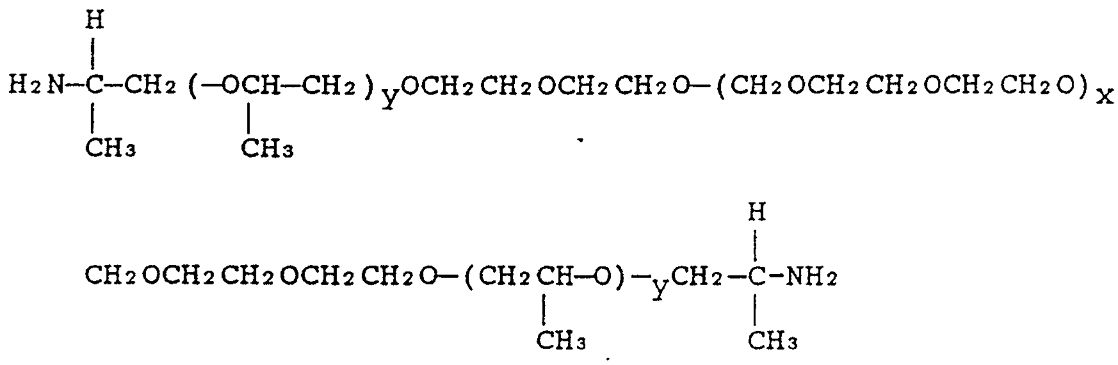

wherein x is 5 to 30, and y is 0 to 4.

5. A polyoxyalkyleneamine having one of the formulae:

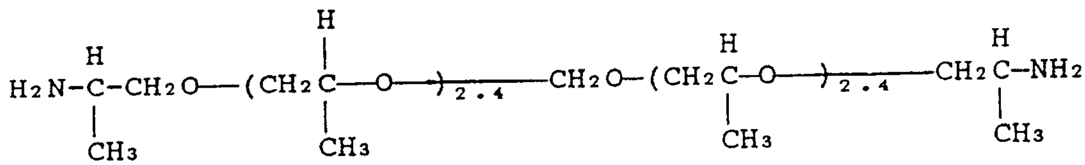

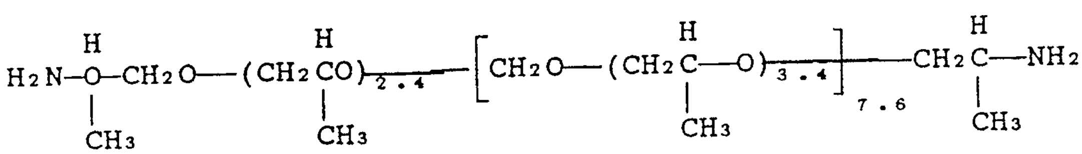

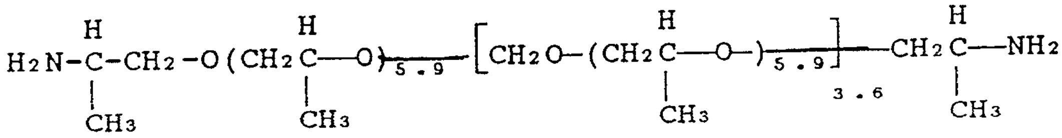

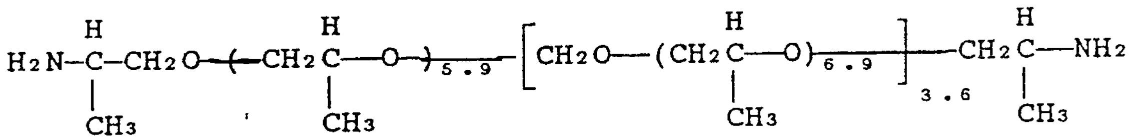

or

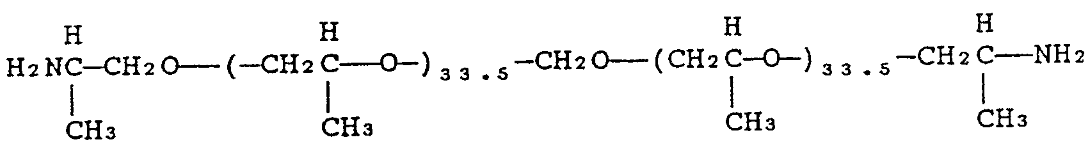

6. A curable epoxy resin composition comprising a vicinal polyepoxide having an epoxide equivalent of at least 1.8, and a curing agent, characterized in that the curing agent is a polyoxyalkylene amine prepared by a method according to Claim 1 or 2.

7. A curable epoxy resin composition comprising a vicinal polyepoxide having an epoxide equivalent of at least 1.8, and a curing agent, characterized in that the curing agent is a polyoxyalkylene amine according to any one of Claims 3 to 5.